**Europäisches Patentamt**

**European Patent Office**

**Office européen des brevets**

(19)

(11) Veröffentlichungsnummer: **0 072 011**
A2

# (12) EUROPÄISCHE PATENTANMELDUNG

(21) Anmeldenummer: **82107165.1**

(22) Anmeldetag: **07.08.82**

(51) Int. Cl.³: **B 27 B 17/00**

(30) Priorität: **10.08.81 DE 8123432 U**

(43) Veröffentlichungstag der Anmeldung: **16.02.83**
**Patentblatt 83/7**

(84) Benannte Vertragsstaaten: **AT CH DE FR IT LI**

(71) Anmelder: **Möhlenkamp, Alfons, Nr. 51, D-4476 Vrees (DE)**

(72) Erfinder: **Möhlenkamp, Johannes, Nr. 51, D-4476 Vrees (DE)**

(74) Vertreter: **Busse & Busse Patentanwälte, Postfach 1226, D-4500 Osnabrück (DE)**

(54) **Handbetätigte Motorsäge.**

(57) Eine handbetätigte Motorsäge mit von einem Motor antreibbaren umlaufenden Schneidgliedern, die vorzugsweise als mobiles Schneidgerät in der Forst-, Land- und Bauwirtschaft Anwendung findet, besitzt ein den Motor aufnehmendes Gehäuse (4) und eine Haltevorrichtung (5, 6) zum Tragen und Führen der Säge. Zur Erleichterung der Längenmessung des zu schneidenden Holzes ist das Gehäuse (4) aussenseitig mit einer Längenmessvorrichtung (9) versehen, deren Messpunktbereich in der Umlaufebene (2) der Schneidglieder angeordnet ist. Hierdurch ist eine genaue Längenmessung des Schneidgutes bei deutlich herabgesetzten Unfallgefahren erreicht.

Handbetätigte Motorsäge

Die Erfindung betrifft eine handbetätigte Motorsäge mit von einem Motor antreibbaren umlaufenden Schneidgliedern, einem den Motor aufnehmenden Gehäuse und einer Haltevorrichtung zum Tragen und Führen der Säge.

Derartige handbetätigte Motorsägen in Form von Kreis-, Ketten- oder Bandsägen finden vorzugsweise als mobile Schneidgeräte in der Forst-, Land- und Bauwirtschaft Anwendung. Sie dienen dabei nicht nur zum Fällen von Bäumen, sondern werden auch allgemein zum Einschneiden von Langholz, d.h. zum Unterteilen in Abschnitte bestimmter Länge, benutzt, die dann als Grubenholz, Pfähle, Industrieholz usw. Verwendung finden. Für bestimmte Anwendungsfälle, insbesonders bei einer vorgesehenen industriellen Weiterverarbeitung der Stamm- bzw. Langholzabschnitte,ist eine genaue Einhaltung der vorgegebenen Abschnittslängen erforderlich.

Um die Längenmessung insbesondere beim Einschneiden von Stämmen im Wald nicht zu umständlich zu machen, sind bereits Bandmaße bekanntgeworden, deren Gehäuse mit einer Einhängvorrichtung versehen ist, die es ermöglicht, daß diese Bandmaße von den Waldarbeitern am Gürtel an einer Körperseite getragen und mitgeführt werden können. Das Meßband wird zur Durchführung eines Meßvorgangs mit seinem entspre-chend ausgebildeten Anfangsteil am Ende des liegenden Stammes eingehakt und läuft beim Abgehen des Stammes in an sich bekannter Weise ab. Ist nun die erste Schnittstelle am Stamm, die nach Augenmaß geschätzt wird, erreicht, so wird mit der einen Hand das Meßband ergriffen, um durch Vor- oder Rückwärtsbewegung die genaue Schnittstelle mit den Augen zu fixieren und ggf. mit der Hand zu kennzeichnen. Dieser Meßvorgang stellt eine sehr

-2-

störende Unterbrechung des Arbeitsflusses dar, da an jeder Schnittstelle das seitlich am Körper hängende Bandmaß ergriffen werden muß. Hinzukommt, daß sich die Unfallgefahr hierbei erhöht, da während jedes Meßvorgangs die laufende Motorsäge mit nur einer Hand gehalten wird.

Ausgehend von einer handbetätigten Motorsäge der eingangs angegebenen Art schafft hier die Erfindung dadurch Abhilfe, daß das Gehäuse außenseitig mit einer Längenmeßvorrichtung versehen ist, deren Meßpunktbereich in der Umlaufebene der Schneidglieder angeordnet ist.

Bei dieser Ausgestaltung wird die Meßvorrichtung nicht mehr als gesondertes Teil von der Bedienungsperson mitgeführt, das bei jedem Meßvorgang gesondert ergriffen und gehandhabt werden muß, sondern die Meßvorrichtung ist als fester Bestandteil in die Motorsäge inkorporiert, derart, daß die Meßvorrichtung zusammen mit der an der Haltevorrichtung getragenen Motorsäge mitbewegt wird und die Anordnung ihres Meßpunktes in der Umlaufebene der Schneidglieder gewährleistet, daß das im Meßpunkt festgelegte Meßergebnis genau der Stellung der Schneidglieder an dem zu schneidenden Stamm o.dgl. Schneidgut entspricht, so daß sofort maßgenau geschnitten werden kann. Es ist dabei insbesondere nicht mehr erforderlich, während des jeweiligen Meßvorgangs eine Hand von der laufenden Motorsäge zu lösen, so daß beide Hände der Bedienungsperson fest an der Säge verbleiben und auch die Augen die Schneidglieder unverwandt im Blickfeld behalten können. Insgesamt wird auf diese Weise das Einschneiden von Langholz bei hoher Maßgenauigkeit und deutlich herabgesetzten Unfallgefahren wesentlich beschleunigt.

In weiterer Ausgestaltung der Erfindung kann der Meßvorrichtung eine Zählvorrichtung zugeordnet sein, die in

-3-

einem Bereich unterhalb eines vorderen Handgriffs der Haltevorrichtung auf der Oberseite des Motorgehäuses angeordnet ist. Diese Zählvorrichtung kann von der Bedienungsperson mit der auf dem vorderen Handgriff liegenden Hand, ohne sich von diesem zu lösen, betätigt werden, um erreichte Stückzahlen beim Einschneiden des Langholzes zu zählen bzw. im Ergebnis festzuhalten. Dabei kann ferner auch der Meßvorrichtung zusätzlich ein Rechengerät z.B. in einfacher mechanischer Ausfertigung oder in der Grundform eines einfachen elektronischen Rechners nach der Art sog. Taschenrechner, zugeordnet sein, damit ggf. zu der ermittelten Stückzahl geschnittener Langholzabschnitte das Holzvolumen aus Länge und Durchmesser von der Bedienungsperson auf einfache Weise errechnet und diese Werte gespeichert werden können.

Weitere Merkmale und Vorteile der Erfindung ergeben sich aus weiteren Unteransprüchen und der nachfolgenden Beschreibung in Verbindung mit der Zeichnung, in der ein Ausführungsbeispiel des Gegenstands der Erfindung schematisch veranschaulicht ist. In der Zeichnung zeigen:

Fig. 1    eine leicht geneigte Draufsicht auf eine handbetätigte Motorsäge nach der Erfindung in Verbindung mit einem Langholz-Teilstück und

Fig. 2    eine perspektivische Darstellung des vorderen oberen Teilbereichs der Motorsäge nach der Erfindung.

In der Zeichnung ist als Beispiel für eine handbetätigte Motorsäge mit von einem Motor antreibbaren umlaufenden Schneidgliedern eine Kettensäge mit einem langgestreckten, flachen Tragschwert 1 aus Stahl als Halte- und Führungsvorrichtung für die Schneidglieder dargestellt. Die Schneidglieder sind bei einer solchen Kettensäge in an

-4-

sich bekannter Weise von mit den Kettengliedern einer Sägekette fest verbundenen Sägezähnen gebildet, deren Umlaufebene bei 2 strichpunktiert angedeutet ist. Die Sägekette ist auf dem Umfang des Tragschwerts 1 in einer (nicht dargestellten) umlaufenden Führungs- und Transportnut geführt, wobei das Tragschwert 1 zwei endseitige Umlenkbereiche aufweist, von denen in der Zeichnung nur ein vorderes Umlenkende 3 sichtbar ist.

Im dem Umlenkende 3 gegenüberliegenden Endbereich ist das Tragschwert 1 mit einem einen Antriebsmotor, insbesondere Verbrennungskraftmotor, enthaltenden Gehäuse 4 fest verbunden, wie auch in diesem Endbereich der Antrieb vom Antriebsmotor in an sich bekannter Weise über ein Antriebskettenrad auf die im übrigen in der umfangsseitigen Führungsnut umlaufende Sägekette übertragen wird.

Mit dem Gehäuse 4 ist ferner eine Haltevorrichtung zum Tragen und Führen der Säge fest verbunden, die von einem hinteren Handgriff 5 und einem vorderen Handgriff 6 gebildet ist. Der Handgriff 5 verläuft in einer zu der Umlaufebene 2 der Schneidglieder parallelen Ebene, d.h. in der aus der Zeichnung ersichtlichen Arbeitsstellung der Säge in einer im wesentlichen senkrechten Ebene. Der Handgriff 6 verläuft demgegenüber in einer zum Handgriff 5 quergestellten Ebene. Im Betrieb wird mit der rechten Hand der Handgriff 5 und mit der linken der Handgriff 6 ergriffen.

Das Gehäuse 4 besitzt bei dem dargestellten Beispiel einen an den Handgriff 5 anschließenden hinteren gewölbten Gehäuseteil 7 und einen sich an diesen einstückig anschließenden oberen Gehäuseteil 8, der eine im wesentliche ebene Oberfläche besitzt. Seitlich an den oberen Gehäuseteil 8 angrenzend ist das Gehäuse 4 mit einer

-5-

Längenmeßvorrichtung 9 versehen, die oberhalb des Tragschwertes 1 angeordnet ist und eine Einheit mit dem
Gehäuse 4 bildet.

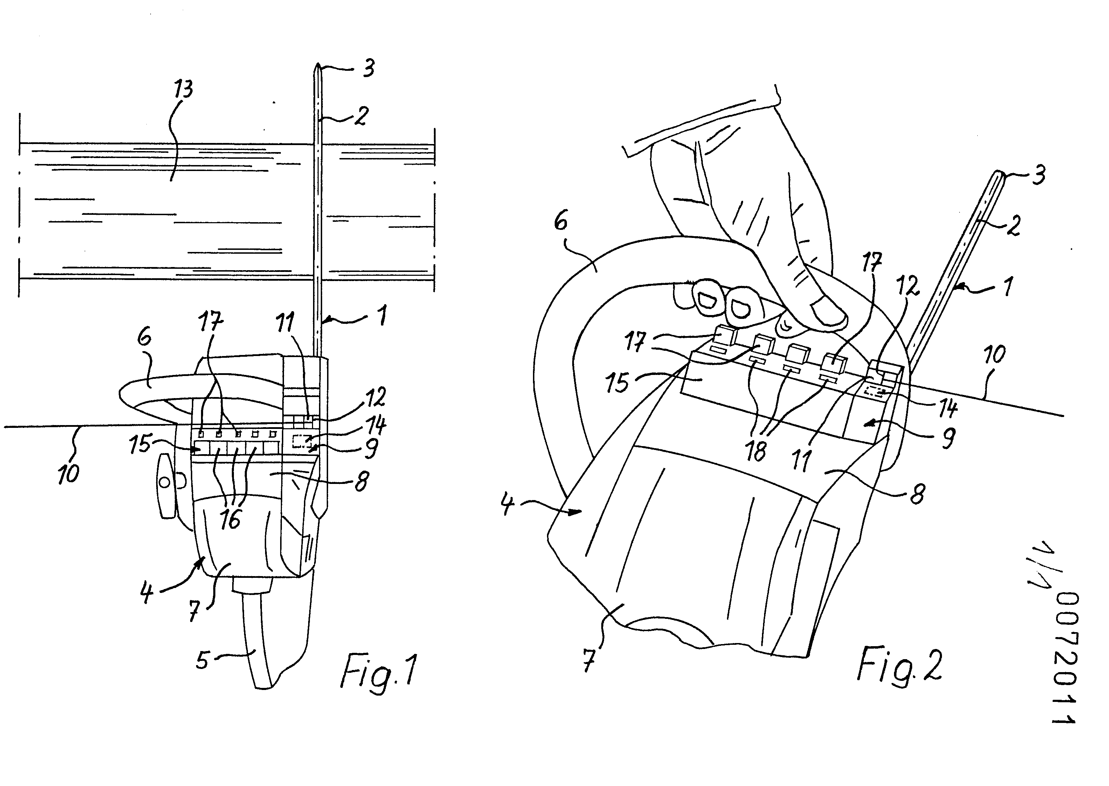

Die Meßvorrichtung 9 weist ein schnur- oder streifenförmiges Meßband 10 als Meßorgan auf. Das Meßband 10 tritt
aus einem Austrittsfenster 11 mit einem mittleren Führungsspalt 12 aus. Der Führungsspalt 12 definiert den Meßpunkt
des Meßbandes 10, der in der Umlaufebene 2 der Schneidglieder bzw. der Sägekette hinter deren Bewegungsbahn angeordnet ist. Aus dem mittleren Führungsspalt 12 kann das
Meßband 10 nach links, entsprechend der Darstellung in
Fig. 1, oder nach rechts, entsprechend der Darstellung
in Fig. 2, aus dem Austrittsfenster 11 ablaufen.

Bei dem dargestellten Beispiel ist als Meßvorrichtung 9
ein an sich bekanntes Bandmaß, d.h. ein mit der Längeneinheit (m) bzw. deren Teilen und/oder Vielfachen beidseitig übereinstimmend bedrucktes Meßband in einem
Stahl- oder Kunststoffgehäuse mit eingeb-auter Selbstrollfeder oder Aufrollkurbel, vorgesehen, das mit seinem
Gehäuse in beliebiger geeigneter Weise fest mit dem
Sägengehäuse 4 verbunden ist. Dabei sind die auf das
Meßband im übrigen aufgedruckten Ziffern entsprechend
den Maßeinheitsteilen in dem Austrittsfenster 11 sichtbar, so daß die jeweils abgewickelte Meßbandlänge am
Führungsspalt 12 genau ablesbar ist und diese Länge ohne
Verzug an dem in Fig. 1 bereichsweise dargestellten
liegenden Stamm 13 mittels der Sägekette geschnitten
werden kann, da deren Umlaufbahn 2 in einer gemeinsamen
Ebene mit dem Führungsspalt 11 liegt.

Anstelle eines solchen Bandmaßes kann aber auch ein einfaches
schnur- oder streifenförmiges Meßband als Meßorgan vorgesehen sein, das wie das Meßband eines Bandmaßes in einem

-6-

Gehäuse mit eingebauter Selbstrollfeder, Aufrollkurbel od.dgl. selbsttätiger Rückspulvorrichtung untergebracht, jedoch selbst beispielsweise nur mit ganzen Vielfachen der Maßeinheit, d.h. eines Meters, z.B. in abwechselnden Farbgebungen, versehen ist. Dabei kann andererseits mit einer solchen Meßvorrichtung oder grundsätzlich auch mit einer Meßvorrichtung in Form eines Maßbandes eine strichpunktiert angedeutete gesonderte Ziffernanzeige 14 für das Meßergebnis vorgesehen sein, indem z.B. mit der Kurbel, Spule od.dgl. Trägervorrichtung des Meßbandes in geeigneter Weise ein Zähler mit Zahlenscheiben oder -rollen verbunden ist.

Im übrigen kann der Meßvorrichtung 9 zum Zählen vorgegebener Stückzahlen geschnittener Langholzabschnitte unterschiedlicher Längen eine Zählvorrichtung 15 zugeordnet sein, die angrenzend an den vorderen Handgriff 6 auf der Oberseite des Gehäuses 4 angeordnet ist und mit diesem eine Einheit bildet. Die Zählvorrichtung 15 umfaßt dabei mehrere Einzelzählwerke 16, die jeweils gesondert durch zugehörige Drucktasten 17 betätigbar sind, um die Zahlenscheiben oder -rollen der Zählwerke, die eine an sich bekannte oder sonst geeignete Ausführung besitzen können, weiterzuschalten.

Wie insbesondere aus Fig. 2 ersichtlich ist, können die Drucktasten 17 vom Daumen der den Handgriff 6 haltenden Hand der Bedienungsperson durch Eindrücken betätigt werden, ohne daß die Hand den Handgriff 6 verlassen muß. Im übrigen sind in Fig. 2 für das Zählwerk 15 noch Sichtfenster 18 dargestellt, an denen der Zählstand entspre-chend der Stellung der Zahlenscheiben oder -rollen der Zählwerke 16 ablesbar ist. Die Zählvorrichtung 15 und die Längenmeßvorrichtung 9 sind gemäß der Darstellung in Fig. 2 beide auf der Oberseite des oberen Gehäuseteils 8 des Gehäuses 4 festgelegt.

Im Betrieb wird das entsprechend ausgebildete, z.B. mit einem Haken oder Anschlag versehene Anfangsstück des Meßbandes 10 am Ende des liegenden Stammes 13 festgelegt, wobei der Meßvorgang durch einfaches Vorwärtstragen der Säge unter Abspulen des Meßbandes 10 nach links oder rechts entlang dem liegenden Stamm erfolgt. Bei einem Ablesen der abgespulten Meßbandlänge entsprechend dem Sollmaß am durch den Führungsspalt 12 definierten Meßpunkt, sei im Austrittsfenster 11 des Meßbandes oder am Anzeigefenster 14 eines gesonderten, mit dem Meßband gekoppelten Zählers, kann unverzüglich der Stamm 13 maßgenau geschnitten werden, ohne daß die Hände der Bedienungsperson jemals die Handgriffe 5 und 6 der Säge verlassen müssen. Für einen neuen Einschneidvorgang wird die Säge einfach entsprechend dem Sollmaß der Abschnittslängen unter weiterem Abspulen des Meßbandes entlang dem Stamm weitergetragen. Gleichzeitig kann nach jedem Schneidvorgang die Zählvorrichtung 15 betätigt werden, ohne daß eine Hand der Bedienungsperson von der Säge genommen werden muß.

-8-

Schutzansprüche:

1. Handbetätigte Motorsäge mit von einem Motor antreibbaren umlaufenden Schneidgliedern, einem den Motor aufnehmenden Gehäuse und einer Haltevorrichtung zum Tragen und Führen der Säge, dadurch gekennzeichnet, daß das Gehäuse (4) außenseitig mit einer Längenmeßvorrichtung (9) versehen ist, deren Meßpunktbereich in der Umlaufebene (2) der Schneidglieder angeordnet ist.

2. Motorsäge nach Anspruch 1, dadurch gekennzeichnet, daß die Meßvorrichtung (9) ein schnur- oder streifenförmiges Meßband (10) als Meßorgan aufweist.

3. Motorsäge nach Anspruch 1 oder 2, dadurch gekennzeichnet, daß die Meßvorrichtung (9) von einem an sich bekannten Bandmaß gebildet ist, das fest auf dem Gehäuse (4) angebracht ist.

4. Motorsäge nach einem der Ansprüche 1 bis 3, dadurch gekennzeichnet, daß die Meßvorrichtung (9) mit einer Anzeigevorrichtung (14) für das Meßergebnis versehen ist.

5. Motorsäge nach einem der Ansprüche 1 bis 4, dadurch gekennzeichnet, daß der Meßvorrichtung (9) eine Zählvorrichtung (15) zugeordnet ist, die in einem Bereich unterhalb eines vorderen Handgriffs (6) der Haltevorrichtung auf der Oberseite des Gehäuses (4) angeordnet ist.

6.     Motorsäge nach Anspruch 5, dadurch gekennzeichnet, daß die Zählvorrichtung (15) mehrere gesondert betätigbare Einzelzählwerke (16) umfaßt.

7.     Motorsäge nach einem der Ansprüche 1 bis 6, dadurch gekennzeichnet, daß der Meßvorrichtung (9) ein Rechengerät zugeordnet ist.

Fig.1

Fig.2

0072011